# EUROPEAN PATENT SPECIFICATION

(11) **EP 2 152 073 B1**
(45) Date of publication and mention of the grant of the patent: **15.04.2015**
(21) Application number: 08750637.4
(22) Date of filing: 19.05.2008
(51) Int. Cl.: A01P 13/00, A01N 41/10, A01N 37/02, A01N 37/06, A01N 47/36, A01N 25/22

(54) **HERBICIDE COMPOSITIONS**
HERBIZIDZUSAMMENSETZUNGEN
COMPOSITIONS HERBICIDES

(30) Priority: 21.05.2007 GB 0709710
(43) Date of publication of application: 17.02.2010
(73) Proprietor: Syngenta Limited, Guildford Surrey GU2 7YH (GB)
(72) Inventor: NETTLETON-HAMMOND, John, Henry, Berkshire RG42 6EY (GB); WILLIAMS, Kirsty, Jane, Berkshire RG42 6EY (GB); BROQUET, Jean-Charles, Daniel, Nicolas, Berkshire RG42 6EY (GB)
(74) Representative: Syngenta International AG
(86) International application number: PCT/GB2008/001706
(87) International publication number: WO 2008/142391

(56) References cited:
- EP-A2- 0 124 295
- US-A- 5 238 604
- US-A- 6 034 034
- C. L. SCHUSTER: "Weed Science Education and Research: The Agronomy Learning Farm and Mesotrione and Sulfonylurea Herbicide Interactions" [Online] 7 March 2007 (2007-03-07), KANSAS STATE UNIVERSITY , MANHATTEN, KANSAS , XP002488060 Abstract of a Dissertation for Ph.D. Retrieved from the Internet: URL:http://krex.k-state.edu/dspace/bitstre am/2097/262/1/ChristopherSchuster2007.pdf> [retrieved on 2008-06-26] page 74 - page 83; tables 3.1-3.5 page 103 - page 107; tables 4.1-4.5
- SUTTON P B: "INTEGRATED WEED MANAGEMENT SYSTEMS FOR MAIZE USING MESOTRIONE, NICOSULFURON AND ACETOCHLOR" BRIGHTON CROP PROTECTION CONFERENCE. WEEDS, BRITISH CROP PROTECTION COUNCIL, S.L, GB, vol. 1, 1 January 1999 (1999-01-01), pages 225-230, XP000997836 ISSN: 0955-1514
- "Prime Oil - Crop Oil Concentrate Label"[Online] 13 March 2006 (2006-03-13), XP002491492 Retrieved from the Internet: URL:http://www.prosourceone.com/img/public /pdf/agrisolution_adjuvants/Prime%20Oil%20 Label.pdf> [retrieved on 2008-06-14]

## Description

The present invention relates to an herbicidal composition comprising a sulfonylurea herbicide and a p-hydroxyphenyl pyruvate dioxygenase (HPPD)-inhibiting herbicide. Herbicidal compositions comprising ALS-inhibiting herbicides and HPPD-inhibiting herbicides are known in the art. For example, EP-A-0915652 discloses, *inter alia,* mixtures of various sulfonylurea herbicides with 2-[4-methylsulfonyl]-2-nitrobenzoyl]-1,3-cyclohexanedione. P. B. Sutton et al discloses the combination of nicosulfuron and mesotrione to provide efficient control of weeds in maize (The 1999 Brighton Conference - Weeds, British Crop Protection Council, pages 225-230). Furthermore, C. L. Schuster discloses the application of a mixture of mesotrione and sulfonylurea herbicides in formulations that comprise 1 % by vol. crop oil concentrate (Abstract of a Ph.D. Dissertation titled "Weed Science Education and Research: The Agronomy Learning Farm and Mesotrione and Sulfonylurea Herbicide Interactions", Kansas State University, 2007).

However, due to their respective intrinsic properties, sulfonylurea and HPPD-inhibiting herbicides are sensitive to chemical breakdown, particularly in liquid formulations, and as such these herbicides are typically mixed together just prior to application, a process known as tank-mixing. Crop oil concentrates, comprising fatty acids or their esters, are known to increase the efficacy of herbicides, especially triketone herbicides (US 5238604). Also, fatty acids are known to provide synergistic control when combined with certain herbicides, including bensulfuron (US 6034034).

Surprisingly, it has now been found that fatty acids can significantly chemically stabilise these herbicides in herbicidal compositions. The ability to provide these herbicides as a stable "ready-mix" composition has several significant advantages. In addition to providing improved chemical stability, the herbicidal compositions of the present invention also provide comparable or improved biological function compared to tank-mixed compositions, both in terms of efficacy and selectivity.

Thus, according to the present invention there is provided an herbicidal composition comprising:-
a. at least one sulfonylurea herbicide;
b. at least one HPPD-inhibiting herbicide; and
c. at least one saturated or unsaturated fatty acid from 1% to 95% by weight.

The sulfonylurea herbicide is preferably selected from the group consisting of amidosulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron, foramsulfuron, halosulfuron-methyl, imazosulfuron, iodosulfuron, isosulfuron-methyl, mesosulfuron-methyl, metsulfuron-methyl, nicosulfuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron, triflusulfuron-methyl and tritosulfuron, or a salt thereof. Particularly preferred is nicosulfuron.

The HPPD inhibitor is preferably selected from the group consisting of isoxazoles, triketones, pyrazoles, benzobicyclon and ketospiradox.

In a preferred embodiment, the isoxazole is a compound of formula (IA) 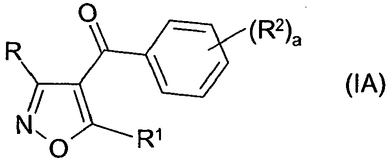 wherein:
R is hydrogen or -CO₂R³;
R¹ is C₁₋₄ alkyl or C₃₋₆ cycloalkyl optionally substituted by C₁₋₆ alkyl;
R² is independently selected from the group consisting of halogen, nitro, cyano, amino, C₁₋₄ alkyl, C₁₋₄ haloalkyl, C₁₋₆ alkoxy, C₁₋₆ alkoxy-C₁₋₆ alkyl, C₁₋₆ alkoxy-C₂₋₆alkoxy, C₁₋₆ alkoxy-C₂₋₆-alkoxy-C₁₋₆ alkyl, C₁₋₄haloalkoxy, C₁₋₄ haloalkoxy-C₁₋₄ alkyl, -(CR⁴R⁵)_{c}S(O)_{b}R⁶, -S(O)_{b}R⁶, -OSO₂R⁶ and - N(R⁷)SO₂R⁶;
R³ is C₁₋₄ alkyl;
R⁴ and R⁵ are independently hydrogen or C₁₋₄ alkyl;
R⁶ is C₁₋₄ alkyl;
R⁷ is hydrogen or C₁₋₆ alkyl;
a is one, two or three;
b is zero, one or two; and
c is one or two (where c is two, the groups (CR⁴R⁵) may be the same or different).

In a preferred embodiment R is hydrogen; R¹ is cyclopropyl; R² is halogen (preferably chloro), or C₁₋₄ haloalkyl (preferably trifluoromethyl); and a is two.

Particularly preferred compounds of formula (IA) include 5-cyclopropyl-4-(2-methylsulfonyl-4-trifluoromethyl)benzoylisoxazole (isoxaflutole) and 4-(2-chloro-4-methylsulphonyl)benzoyl-5-cyclopropylisoxazole (isoxachlortole), especially isoxaflutole.

In a preferred embodiment, the triketone is a 2-benzoyl-1,3-cyclohexanedione of formula (IB), 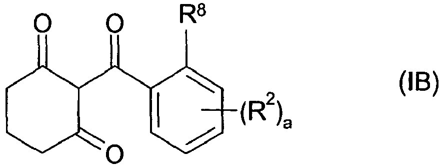 wherein:
R⁸ is selected from the group consisting of halogen, nitro, C₁₋₄ alkyl, C₁₋₄ haloalkyl, C₁₋₆ alkoxy, C₁₋₆ alkoxy-C₁₋₆ alkyl, C₁₋₆ alkoxy-C₂₋₆alkoxy, C₁₋₆ alkoxy-C₂₋₆-alkoxy-C₁₋₆ alkyl, C₁₋₄ haloalkoxy and C₁₋₄ haloalkoxy-C₁₋₄ alkyl.
Preferably, R⁸ is chloro or nitro.

With regard to compounds of formula (IB) R² is preferably selected from the group consisting of -SO₂CH₃, CF₃ and 2,2,2 trifluoroethoxymethyl.

Preferred compounds of formula (IB) are 2-(2'-nitro-4'-methylsulphonylbenzoyl)-1,3-cyclohexanedione (mesotrione), 2-(2'-nitro-4'-methylsulphonyloxybenzoyl)-1,3-cyclohexanedione, 2-(2'-chloro-4'-methylsulphonylbenzoyl)-1,3-cyclohexanedione (sulcotrione), 2-[2-chloro-4-(methylsuphonyl)-3-[2,2,2-trifluoroethoxy]methyl]benzoyl]-1,3-cyclohexanedione (tembotrione), 4,4-dimethyl-2-(4-methanesulphonyl-2-nitrobenzoyl)-1,3-cyclohexanedione, 2-(2-chloro-3-ethoxy-4- methanesulphonylbenzoyl)-5-methyl-1,3-cyclohexanedione and 2-(2-chloro-3-ethoxy-4-ethanesulphonylbenzoyl)-5-methyl-1,3-cyclohexanedione

The triketone may also be of formula (IC)

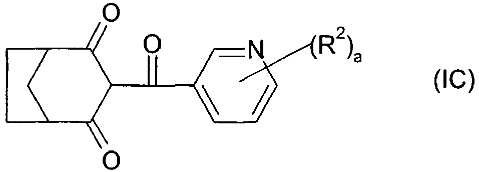

With regard to compounds of formula (IC) R² is preferably selected from the group consisting of -SO₂CH₃, CF₃ and methoxyethoxymethyl.

In a particularly preferred embodiment the triketone of formula (IC) is 4-Hydroxy-3-[2-(2-methoxyethoxymethyl)-6-trifluoromethylpyridine-3-carbonyl]-bicyclo[3.2.1]oct-3-en-2-one).

Suitably, the pyrazole is a compound of formula (ID) 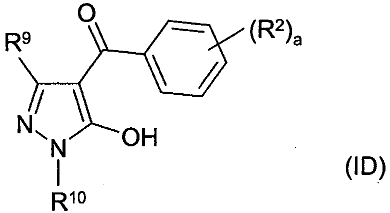 wherein:
R⁹ and R¹⁰ are each independently selected from the group consisting of hydrogen, halo and C₁₋₄ alkyl;

With regard to compounds of formula (ID) R² is preferably selected from the group consisting of methyl, -SO₂CH₃ and CF₃.

In a particularly preferred embodiment the pyrazole of formula (ID) is 5-hydroxyl-1,3-dimethyl-1H-pyrazol-4-yl)[2-(methylsulfonyl)-4-(trifluoromethyl)phenyl]methanone (pyrasulfotole).

Further examples of pyrazoles are compounds of formula (IE) 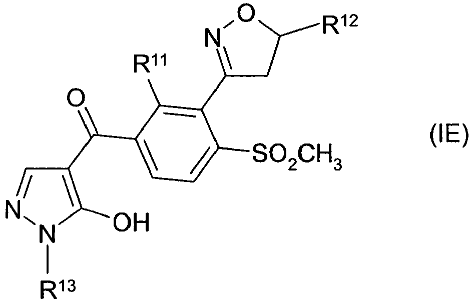 wherein:
R¹¹ is C₁₋₂ alkyl or chloro;
R¹² is hydrogen or C₁₋₄ alkyl; and
R¹³ is C₁₋₄ alkyl.

In a preferred embodiment the pyrazole of compound (IE) is [3-(4,5-dihydro-3-isoxazolyl)-2-methyl-4-(methylsulfonyl)phenyl](5-hydroxy-1-methyl-1*H-*pyrazol-4-yl)methanone (topramesone).

Benzobicyclon is a compound of formula (IF)

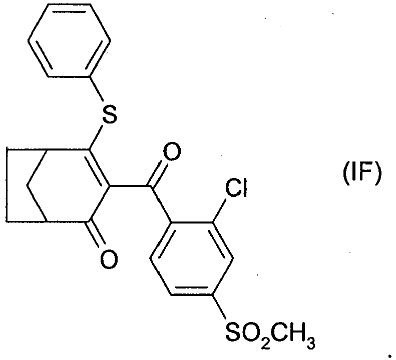

Ketospiradox is a compound of formula (IG)

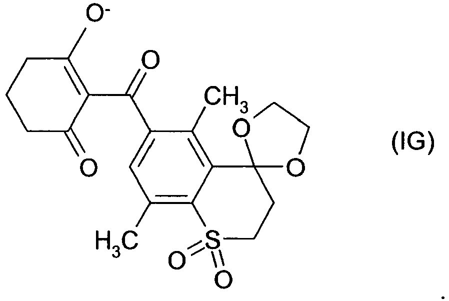

It should be understood that reference to the herbicides above also includes, for example, reference to tautomers and agriculturally acceptable salts thereof. Examples of agriculturally acceptable salts include alkali metal salts such as sodium or potassium, alkaline earth metal salts such as magnesium or calcium, amine salts such as a monomethyl amine, dimethylamine, triethylamine, ammonium salts or dimethyl ammonium salts. The herbicide may also be provided as a metal chelate. Metal ions which may be useful in forming the metal chelate include di- and trivalent transition metal ions such as Cu²⁺, Zn²⁺, Co²⁺, Fe²⁺, Ni²⁺ and Fe³⁺.

In a preferred embodiment of the invention the HPPD-inhibiting herbicide is selected from the group consisting of mesotrione, sulcotrione, tembotrione, 4-Hydroxy-3-[2-(2-methoxyethoxymethyl)-6-trifluoromethylpyridine-3-carbonyl]-bicyclo[3.2.1]oct-3-en-2-one), isoxaflutole and pyrasulfotole. Particularly preferred is wherein the HPPD-inhibiting herbicide is mesotrione.

The composition of the present invention may typically contain as little as about 0.5% to as much as about 95% or more by weight of each active ingredient. Preferably, the composition contains from 1% to 10% of each active ingredient. In a particularly preferred embodiment, the sulfonylurea herbicide is present in the composition from 0.5 to 10% w/v, more preferably from 0.5 to 5% w/v; the HPPD-inhibiting herbicide is present in the composition from 0.5 to 10 % w/v, more preferably from 5 to 10% w/v. The ratio of the sulfonylurea herbicide to the HPPD-inhibiting herbicide will depend on the particular application. Typically, the ratio is 10:1 to 1:10. The sum of the individual ingredients in the composition is 100%.

Preferably, the saturated or unsaturated fatty acid comprises a chain of at least 10 carbon atoms, more preferably from 10 to 20 carbon atoms, even more preferably from 12 to 18 carbon atoms. Preferably, the fatty acid is unsaturated. The saturated or unsaturated fatty acid is preferably selected from the group consisting of lauric acid, palmitic acid, stearic acid, oleic acid, linoleic acid, linolenic acid, erucic acid, brassidic acid, caprylic acid, caproleic acid, palmitoleic acid, vaccenic acid, elaidic acid, arachidic acid and capric acid. Particularly preferred is oleic acid. The concentration of the fatty acid in the composition is from 1% to 95% by weight, preferably from 5% to 90% by weight and even more preferably from 10% to 90% by weight.

Surprisingly, it has been shown that a saturated or unsaturated fatty acid provides improved chemically stability of both the sulfonylurea and HPPD-inhibiting herbicide in the formulation.

The herbicidal composition of the present invention can be a "solid" formulation, for example, a water dispersible granule (WG) but is preferably a liquid composition - in particular an "oil dispersion" (OD) - especially wherein the herbicide components are present in suspension in the fatty acid component. In a preferred embodiment the median particle size diameter of the HPPD-inhibiting herbicide and/or the sulfonylurea herbicide in the liquid herbicidal composition is about two microns or less, as compositions comprising particles of this size have been shown to exhibit improved physical stability.
The composition of the present invention may further comprise one or more additional components, for example surfactants, including anionic and non-ionic surfactants. Examples of such surfactants include, alkyl sulfonates, alkylbenzene sulfonate salts, alkylnaphthalenesulfonate salts, lignin sulfonates, polyarylphenols polyoxyethylene glycol alkyl ethers, polyarylphenyl ether phosphates and sulphates, polyoxyethylene lauryl ethers, polyoxyethylene alkyl ethers, polyoxyethylene alkylaryl ethers, polyoxyetylene fatty acid esters, polyoxypropylene fatty acid esters, polyoxyethylene sorbitan fatty acid esters; polyoxyethylene styryl phenyl ethers, polycarboxylates; dialkyl-sulfosuccinates, alkyl diglycol ether sulfates, polyoxyethylene alkylaryl ether sulfates, phosphoric acid esters, polyoxyethylene hydrogenated castor oils, benzoates, fatty acid polyglycerides, glycerine fatty acid esters, sorbitan monooleates, polyoxyethylene sorbitan monolaurates, fatty acid alcohol polyglycol ethers, salts of alkyl sulfates, soaps, dialkyl esters of sulfosuccinate salts, alkyl polyglycoside, quaternary amines, block copolymers of ethylene oxide and propylene oxide, salts of mono and dialkyl phosphate esters, alkylene glycol alkyl ethers etc. It is particularly preferred that the composition of the present invention includes a polyarylphenol surfactant, and in particular tristyrylphenol ethoxylate (available commercially as Soprophor BSU) as this surfactant provides an exceptionally good combination of chemical and physico-chemical stability of the herbicidal composition. Other additional formulation components such as an antifoam, a structuring agent (e.g a thickener), a solid carrier or a filler may also be included in the formulation of the present invention. Examples of such components include carboxymethylcellulose, xanthane gum, pyrogenic silica, precipitated silica, diatomaceous earth, slaked lime, calcium carbonate, talc, white carbon, kaolin, bentonite, starch, sodium carbonate, sodium bicarbonate, zeolite etc. Pyrogenic silica from the Aerosil^{®} range is a preferred thickener. The quantity of these additional formulation components in the herbicidal composition is typically from 0.5% to 30% w/v.

The composition of the present invention may further comprise a vegetable oil and/or a mineral oil and/or an alkyl ester. Examples of vegetable oils include, for example, olive oil, kapok oil, castor oil, papaya oil, camellia oil, coconut oil, sesame oil, corn oil, rice bran oil, peanut oil, rapeseed oil, cottonseed oil, soybean oil, linseed oil, sunflower and safflower oil and fatty acids originated therefrom and alkylesters of the fatty acids. Rape seed oil methyl ester (MRSO) is particularly preferred. Mineral oils include, for example, paraffin such as liquid paraffin and paraffin petroleum. Alkyl esters include, for example, alkylacetates.

The herbicidal composition of the present invention may further comprise a small quantity of water and, optionally, an acid. Preferably, the water content is from 0.5 to 20% v/v, more preferably from 0.5 to 5% v/v and even more preferably from 0.5 to 2% w/v. The water can be introduced into the herbicidal composition by addition at a suitable stage in the manufacture, or by using either of the active ingredients as a "wet paste" in the preparation of the composition. It is apparent that the stabilising effect provided by the present invention is particularly apparent when a small quantity of water is present in the formulation, especially OD formulations comprising triketones such as mesotrione. Examples of suitable acids include inorganic acids, such as o-phosphoric acid or a carboxylic acid, such as acetic acid.

The herbicidal composition of the present invention may further comprise an additional pesticidal ingredient, for example an additional herbicide, fungicide or insecticide. Examples of additional pesticidal ingredients include herbicides such as acetochlor, aclonifen, alachlor, atrazine, benazolin, bentazon, bromoxynil, clethodim, clopyralid, cloransulam methyl, cyanazine, cycloxydim, dicamba, dimethenamid (including dimethenamid-P), fenoxaprop, fluazifop, fluroxypir, fluazifop-P, flufenacet, flumetsulam, fomesafen, glufosinate, glyphosate, haloxyfop, imazamox, imazaquin, imazethapyr, metolachlor (including S-metolachlor), metribuzin, pendimethalin, pethoxamid, pyrithiobac sodium, simazine, terbuthylazine and thiencarbazone. In a particularly preferred embodiment the additional pesticidal ingredient is glyphosate and/or glufosinate. The content of the additional pesticidal ingredient in the composition is typically 0.2 - 40%, preferably 0.5 - 20% by weight.

The herbicide composition of the present invention can also be used as a mixture together with or in combination with other agricultural chemicals, tank-mix adjuvants, crop oil concentrates, fertilizers and/or safeners.

The herbicidal composition of the present invention is preferably a liquid "ready-mix" formulation - that will be diluted prior to use. Dilution of the herbicidal composition of the present invention will typically result in a suspoemulsion.

The present invention further provides a method for the preparation of an herbicidal composition of the present invention comprising mixing together, simultaneously or sequentially in any order the components a, b and c.

The present invention still further provides a method of controlling undesirable vegetation at a locus which comprises diluting a herbicidal composition according to the present invention with water and applying a weed controlling amount of the diluted composition to the locus. The application of the composition may vary within wide limits and depends on the nature of the soil, the method of application (pre- or post-emergence; seed dressing; application to the seed furrow etc), the crop plant, the undesirable vegetation to be controlled, the prevailing climatic conditions and other factors.

The locus may include both "desirable" and "undesirable" vegetation. Desirable vegetation is for example a crop which is substantially unaffected by the herbicide application. Examples of crops include for example perennial crops such as citrus fruit, grapevines, nuts, oil palm, olives, pome fruit, stone fruit and rubber, and annual arable crops, such as cereals, for example barley and wheat, cotton, oilseed rape, maize, rice, soy beans, sugar beet, sugar cane, sunflowers, ornamentals and vegetables. The compositions of the present invention are particularly suited for controlling undesirable vegetation in maize. The undesirable vegetation my include weeds including monocotyledonous species, for example *Agrostis, Alopecurus, Avena, Bromus, Cyperus, Digitaria, Echinochloa, Lolium, Monochoria, Rottboellia,* example *Abutilon, Amaranthus, Chenopodium, Chrysanthemum, Galium, Ipomoea, Nasturtium, Sinapis, Solanum, Stellaria, Veronica, Viola* and *Xanthium.*

The term "crop" is to be understood as also including a crop which has been genetically modified and in particular one which has been rendered tolerant to herbicides or classes of herbicides (e.g. ALS-, GS-, EPSPS-, PPO- and HPPD-inhibitors).

The application rate of the sulfonylurea herbicide will typically be from 5 to 150 g/ha, more preferably from 10 to 100 g/ha. The application rate of the HPPD-inhibiting herbicide will typically be from 10 to 2000 g/ha, preferably from 50 to 500 g/ha.

The present invention further provides the use of a saturated or unsaturated fatty acid to chemically stabilise a liquid herbicidal composition comprising at least one sulfonylurea herbicide and at least one HPPD-inhibiting herbicide.

### EXAMPLE 1

### Stability studies.

### Preparation of formulation F1

Hypermer B246 is solubilised in the mineral oil. Surfactants and thickeners are then added as outlined in the tabled below. Mesotrione (as a wet paste) and nicosulfuron (as technical grade material) are then dispersed into the mixture. The dispersion is then ground together in a bead mill. A fine dispersion of mesotrione and nicosulfuron in the oil is obtained.

### Preparation of formulations F2 to F14

Hypermer B246 is solubilised in methylated rapeseed oil and then mesotrione (as a wet paste) and nicosulfuron (as technical grade material) are dispersed into the mixture. The dispersion is then ground together in a bead mill. A fine dispersion of mesotrione and nicosulfuron in the methylated rapeseed oil is obtained.

The above millbase is then added under mixing to mixtures of the appropriate carriers (oils) with surfactants and thickeners as outlined in the table below. A fine dispersion of mesotrione and nicosulfuron is obtained.

The above-formulations may also be provided using a so-called one-pot process whereby all of the ingredients are mixed together and the resulting mixture ground in a bead mill.

All the samples were put into storage at an elevated temperature (8 weeks at 40°C) in order to simulate long-term stability at more moderate temperature.

### Example 1A:

The amounts of the components present in samples F1 to F7 are given below. The values are referred in % w/v.

| | F1 | F2 | F3 | F4 | F5 | F6 | F7 |
|---|---|---|---|---|---|---|---|
| Mesotrione | 7.5 | 7.5 | 7.5 | 7.5 | 7.5 | 7.5 | 7.5 |
| Nicosulfuron | 3.0 | 3.0 | 3.0 | 3.0 | 3.0 | 3.0 | 3.0 |
| Hypermer ® B246 ¹ | 1.1 | 1.1 | 1.1 | 1.1 | 1.1 | 1.1 | 1.1 |
| Dodecylbenzenessulfonate calcium salt | 3.0 | 3.0 | 3.0 | - | 3.0 | 3.0 | 3.0 |
| Castor oil ethoxylate with 35 ethoxy units | 3.0 | 3.0 | 3.0 | - | 3.0 | 3.0 | 3.0 |
| Tristyrylphenol ethoxylate, 16 ethoxy units | - | - | - | 10.0 | - | - | - |
| Bentone ® 34 ² | 1.0 | 1.0 | - | - | 1.0 | 1.5 | 1.0 |
| Propylene carbonate | 0.3 | 0.3 | - | - | 0.3 | 3.5 | 0.3 |
| Aerosil ® R972 ³ | - | - | 1.5 | - | - | - | - |
| Aerosil ® 200 ⁴ | - | - | 3.5 | 1.3 | - | - | - |
| Exxsol ® D 100 ⁵ | 81.1 | - | - | - | - | - | - |
| Agnique ® ME 18 RD ⁶ | - | 81.1 | 77.4 | 77.1 | 12.6 | 12.6 | 12.6 |
| Sunflower oil | - | - | - | - | 68.5 | 64.8 | - |
| Oleic acid | - | - | + | - | - | - | 68.5 |
| Sum | 100.0 | 100.0 | 100.0 | 100.0 | 100.0 | 100.0 | 100.0 |

| | | | | | | | |
|---|---|---|---|---|---|---|---|
| ¹ Hypermer ® B246is a block copolymer of polyhydroxystearic acid and polyalkylene glycols. ² Bentone ® 34 is a quaternary ammonium salt of montmorillonite ³ Aerosil ® R972 is a fumed hydrophobic silica. ⁴ Aerosil ® 200 is a fumed silica. ⁵ Exxsol ® D100 is a mineral oil (a mixture of aliphatic and alicyclic hydrocarbons (C13 - C16)). ⁶ Agnique ® ME 18 RD is a methylated rapeseed oil. | | | | | | | |

The stability data provided below show the amount of decomposition of mesotrione and nicosulfuron in the various oil dispersions after storage (8 weeks at 40°C). The decomposition was assessed using High Performance Liquid Chromatography.

| Oil dispersions | Decomposition of mesotrione | Decomposition of nicosulfuron |
|---|---|---|
| F1 (mineral oil) | 7.6% | 11.5% |
| F2 (rapeseed oil methyl ester) | 12.2% | 12.3% |
| F3 (rapeseed oil methyl ester) | 5.6% | 7.1% |
| F4 (rapeseed oil methyl ester) | 17.5% | 45.5% |
| F5 (sunflower oil) | 12.7% | 7.4% |
| F6 (sunflower oil) | 17.1% | 35.6% |
| F7 (oleic acid) | 0.0% | 2.8% |

These results show the improved stability of both mesotrione and nicosulfuron in herbicidal compositions comprising oleic acid compared with compositions comprising mineral oil, methylated rapeseed oil or sunflower oil. It can be seen that the stability of both the mesotrione and the nicosulfuron is markedly improved in compositions comprising oleic acid.

### EXAMPLE 2

Further experiments are conducted using formulations F4 and F8 to F14, the composition of which is outlined in the table below. The values are referred in % by weight.

| | F4 | F8 | F9 | F10 | F11 | F12 | F13 | F14 |
|---|---|---|---|---|---|---|---|---|
| Mesotrione | 7.7 | 7.7 | 7.7 | 7.7 | 7.7 | 7.7 | 7.7 | 7.7 |
| Nicosulfuron | 3.1 | 3.1 | 3.1 | 3.1 | 3.1 | 3.1 | 3.1 | 3.1 |
| Hypermer ® B246 | 1.1 | 1.1 | 1.1 | 1.1 | 1.1 | 1.1 | 1.1 | 1.1 |
| Tristyrylphenol ethoxylate, 16 ethoxy units | 10.3 | 10.3 | 10.3 | 10.3 | 10.3 | 10.3 | 10.3 | 10.3 |
| Aerosil ® 200 | 1.3 | 1.3 | 1.3 | 1.3 | 1.3 | 1.3 | 1.3 | 1.3 |
| Agnique ® ME 18 RD | 76.5 | 13.0 | 13.0 | 13.0 | 13.0 | 13.0 | 13.0 | 13.0 |
| Coconut oil | - | 63.5 | - | - | - | - | - | - |
| Oleic acid | - | - | 63.5 | - | - | - | - | - |
| Linoleic acid | - | - | - | 63.5 | - | - | - | - |
| Linolenic acid | - | - | - | - | 63.5 | - | - | - |
| Lauric acid | - | - | - | - | - | 63.5 | - | - |
| Capric acid | - | - | - | - | - | - | 63.5 | - |
| Caprylic acid | - | - | - | - | - | - | - | 63.5 |
| Sum | 100 | 100 | 100 | 100 | 100 | 100 | 100 | 100 |

The stability data provided below show the amount of decomposition of mesotrione and nicosulfuron in the various oil dispersions after storage (8 weeks at 40°C). The decomposition was assessed using High Performance Liquid Chromatography.

| Oil dispersions | Decomposition of mesotrione | Decomposition of nicosulfuron |
|---|---|---|
| F4 (methylated rapeseed oil) | 17.5% | 45.5% |
| F8 (coconut oil - vegetable oil) | 10.3% | 44.8% |
| F9 (C₁₈ monounsaturated FA) | 1.8% | 10.5% |
| F10 (C₁₈ diunsaturated FA) | 1.1% | 11.3% |
| F11 (C₁₈ triunsaturated FA) | 1.1% | 12.9% |
| F12 (C₁₂ saturated FA) | 1.6% | 10.0% |
| F13 (C₁₀ saturated FA) | 2.2% | 12.7% |
| F14 (C₈ saturated FA) | 0.8% | 22.1% |

These results show the stability of both mesotrione and nicosulfuron in herbicidal compositions comprising various fatty acids (FA) compared with compositions comprising methylated rapeseed oil or coconut oil (which comprises mostly C₁₂ and C₁₄ saturated triglycerides). It can be seen that the stability of both the mesotrione and the nicosulfuron is markedly improved in compositions comprising a fatty acid.

### EXAMPLE 3

Further experiments are conducted to look at the stability of other HPPD inhibitor with nicosulfuron in oleic acid v. methylated rape seed oil (MRSO). Samples are prepared in a similar manner as described previously. The stability data provided below show the amount of decomposition of the HPPD inhibitor and the ALS-inhibitor following storage at 40°C for 47 days.

| Herbicide Combination | % remaining after storage | | | |
|---|---|---|---|---|
| | HPPD Inhibitor | | Sulfonylurea | |
| | Oleic Acid | MRSO | Oleic Acid | MRSO |
| Isoxaflutole / Nicosulfuron | 87.9 | 87.0 | 96.2 | 95.0 |
| Sulcotrione / Nicosulfuron | 99.9 | 92.8 | 97.0 | 95.6 |
| Tembotrione / Nicosulfuron | 99.3 | 87.7 | 97.1 | 95.5 |
| Compound A* / Nicosulfuron | 98.1 | 90.4 | 93.9 | 96.5 |
| Pyrasulfotole / Nicosulfuron | 99.2 | 98.6 | 96.7 | 97.7 |

| | | | | |
|---|---|---|---|---|
| Compound A = 4-Hydroxy-3-[2-(2-methoxyethoxymethyl)-6-trifluoromethylpyridine-3-carbonyl]-bicyclo [3.2.1]oct-3-en-2-one). | | | | |

### EXAMPLE 4

Further experiments are conducted to look at the stability of mesotrione with various ALS-inhibiting herbicides in oleic acid v. methylated rape seed oil (MRSO). Samples are prepared in a similar manner as described previously. The stability data provided below show the amount of decomposition of the HPPD inhibitor and the ALS-inhibitor following storage at 40°C for 47 days.

| Herbicide Combination | % remaining after storage | | | |
|---|---|---|---|---|
| | HPPD Inhibitor | | Sulfonylurea | |
| | Oleic Acid | MRSO | Oleic Acid | MRSO |
| Mesotrione / Oxasulfuron | 97.6 | 52.8 | 59.0 | 6.1 |
| Mesotrione / Triasulfuron | 98.7 | 95.5 | 96.5 | 95.7 |
| Mesotrione / Prosulfuron | 99.4 | 81.2 | 34.4 | 0.0 |
| Mesotrione / Primisulfuron-methyl | 97.8 | 86.7 | 88.3 | 21.2 |
| Mesotrione / Tribenuron-methyl | 91.7 | 38.4 | 0.0 | 0.0 |
| Mesotrione / Sulfometuron-methyl | 99.5 | 87.7 | 94.7 | 89.8 |
| Mesotrione / Flazasulfuron | 100.0 | 58.2 | 77.2 | 0.0 |
| Mesotrione / Chlorimuron-ethyl | 99.0 | 84.3 | 77.9 | 1.5 |
| Mesotrione / Trifloxysulfuron | 95.5 | 15.5 | 61.8 | 0.0 |
| Mesotrione / Chlorsulfuron | 99.0 | 74.2 | 76.7 | 0.0 |

### EXAMPLE 5

Further experiments are conducted to look at the stability of three way herbicide combinations in oleic acid v. methylated rape seed oil (MRSO). Samples are prepared in a similar manner as described previously. The stability data provided below show the amount of decomposition of the HPPD inhibitor and the ALS-inhibitor following storage at 40°C for 47 days.

| Herbicide Combination | % remaining after storage | | | | | |
|---|---|---|---|---|---|---|
| | Component (1) | | Component (2) | | Component (3) | |
| | Oleic Acid | MRSO | Oleic Acid | MRSO | Oleic Acid | MRSO |
| Mesotrione (1) / Nicosulfuron (2) / Pyrithiobac-sodium (3) | 93.4 | 7.6 | 91.7 | 34.8 | 99.2 | 68.0 |

### EXAMPLE 6

Experiments are conducted to look at the effect particle size has on the physical stability of the compositions of the present invention. Formulation F9 as referred to previously was ground in a bead mill to two different specifications:
(1) F14A with a median particle size of 3.1 µm
(2) F14B with a median particle size of 2.1 µm

Particle size was measured using laser diffraction.

The separation (clear layer percentage) was monitored at room temperature at various time points indicated in the table below.

| | After 10 days | After 24 days | After 45 days | After 143 days |
|---|---|---|---|---|
| F14A | 0.6% | 1.6% | 2.8% | 12.8% |
| F14B | 0.4% | 0.8% | 1.2% | 9.4% |

These results show the improved physical stability of the formulation when milled to a lower particle size.

### EXAMPLE 7

Experimental field studies are conducted to look at the biological performance of the compositions of the present invention. Experiments are conducted using a solo nicosulfuron (NSU) 40g/l SC formulation (Milagro^{®}), a solo mesotrione (MST) 100g/l SC formulation (Callisto^{®}), a tank mix of the two solo formulations, a ready-mix mesotrione/nicosulfuron formulation with methylated rapeseed oil as the main carrier (F3) and a ready-mix mesotrione/nicosulfuron formulation with oleic acid as the main carrier (F9). The performance of these formulations was tested on various monocot and dicot weed species - and the results are provided in the tables below. The figures provided show the damage/control obtained with the various formulations compared to control plants.

### Monocot Results

| | NSU | NSU:MST Tank-Mix | NSU:MST (F3) | NSU:MST (F9) |
|---|---|---|---|---|
| Rate g ai/ha | 30 | 30:75 | 30:75 | 30:75 |
| DIGSA | 40.0 | 60.3 | 50.6 | 56.4 |
| ECHCG | 76.1 | 89.3 | 76.9 | 87.9 |
| POAAN | 100.0 | 100.0 | 100.0 | 100.0 |
| SORHA | 92.2 | 93.8 | 94.7 | 93.5 |

| | | | | |
|---|---|---|---|---|
| DIGSA = *Digitaria sanguinalis;* ECHCG = *Echinochloa crus-galli*; POAAN = *Poa annua*; SORHA = *Sorghum halepense.* | | | | |

### Dicot Results

| | MST | NSU:MST (Tank-Mix) | NSU:MST (F3) | NSU:MST (F9) |
|---|---|---|---|---|
| Rate g ai/ha | 30 | 30:75 | 30:75 | 30:75 |
| ABUTH | 95.3 | 93.8 | 98.0 | 95.7 |
| AMABL | 50.0 | 96.3 | 82.5 | 99.0 |
| AMARE | 93.8 | 98.5 | 98.7 | 99.1 |
| CHEAL | 99.7 | 99.9 | 98.3 | 99.8 |
| CHEPO | 100.0 | 100.0 | 100.0 | 99.5 |
| DATST | 100.0 | 100.0 | 100.0 | 100.0 |
| HIBTR | 16.7 | 56.7 | 56.7 | 65.0 |
| POLCO | 20.0 | 33.3 | 10.0 | 26.7 |
| POLLA | 98.3 | 97.7 | 91.5 | 95.5 |
| POLPE | 92.3 | 94.0 | 90.7 | 95.0 |
| SENVU | 96.0 | 98.5 | 99.0 | 98.5 |
| SINAR | 100.0 | 100.0 | 100.0 | 100.0 |
| SOLNI | 99.1 | 99.5 | 99.9 | 99.4 |
| SOLVI | 100.0 | 100.0 | 100.0 | 100.0 |
| STAAN | 100.0 | 100.0 | 100.0 | 100.0 |
| STEME | 100.0 | 90.0 | 83.3 | 83.3 |
| VERPE | 82.5 | 96.5 | 96.5 | 95.5 |
| VIOAR | 91.7 | 73.8 | 64.8 | 76.7 |
| XANSP | 67.5 | 72.8 | 72.7 | 63.3 |
| XANST | 88.3 | 86.7 | 88.3 | 90.0 |

| | | | | |
|---|---|---|---|---|
| ABUTH = *Abutilon theophrasti*; AMABL = *Amaranthus blitoides*; AMARE = *Amaranthus retroflexus* ; CHEAL = *Chenopodium album*; CHEPO = *Chenopodium polyspermum*; DATST = *Datura stramonium*; HIBTR = *Hibiscus trionum*; POLCO = *Polygonum convolvulus*; POLLA = *Polygonum lapathifolium*; POLPE = *Polygonum persicaria* ; SENVU = *Senecio vulgaris*; SINAR = *Sinapis arvensis*; SOLNI = *Solanum nigrum*; SOLVI = *Solanum viarum*; STAAN = *Stachys annua*; STEME = *Stellaria media*; VERPE = *Veronica persica*; VIOAR = *Viola arvensis*; XANSP = *Xanthium spinosum*; XANST =*Xanthium strumarium*. | | | | |

## Claims

1. An herbicidal composition comprising:-
a. at least one sulfonylurea herbicide;
b. at least one HPPD-inhibiting herbicide; and
c. at least one saturated or unsaturated fatty acid from 1% to 95% by weight.

2. An herbicidal composition according to claim 1 wherein the sulfonylurea herbicide is selected from the group consisting of amidosulfuron, bensulfuron-methyl, chlorimuron-ethyl, chlorsulfuron, cinosulfuron, cyclosulfamuron, ethemetsulfuron-methyl, ethoxysulfuron, flazasulfuron, flucetosulfuron, flupyrsulfuron, foramsulfuron, halosulfuron-methyl, imazosulfuron, iodosulfuron, isosulfuron-methyl, mesosulfuron-methyl, metsulfuron-methyl, nicosulfuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron, triflusulfuron-methyl and tritosulfuron, or an agriculturally acceptable salt thereof.

3. An herbicidal composition according to claim 1 or claim 2, wherein the sulfonylurea urea herbicide is nicosulfuron.

4. An herbicidal composition according to any on of the previous claims wherein the HPPD-inhibiting herbicide is selected from the group consisting of mesotrione, sulcotrione, tembotrione, 4-Hydroxy-3-[2-(2-methoxyethoxymethyl)-6-trifluoromethylpyridine-3-carbonyl]-bicyclo[3.2.1]oct-3-en-2-one), isoxaflutole and pyrasulfotole.

5. An herbicidal composition according to claim 4, wherein the HPPD-inhibiting herbicide is mesotrione.

6. An herbicidal composition according to any one of the previous claims wherein the saturated or unsaturated fatty acid comprises a chain of at least 10 carbon atoms.

7. An herbicidal composition according to claim 6, wherein the saturated or unsaturated fatty acid is selected from the group consisting of lauric acid, oleic acid, linoleic acid, linolenic acid and capric acid.

8. An herbicidal composition according to claim 7, wherein the saturated or unsaturated fatty acid is oleic acid.

9. An herbicidal composition according to any one of the previous claims, wherein the composition further comprises a surfactant.

10. An herbicidal composition according to claim 9, wherein the surfactant is a polyarylphenol.

11. An herbicidal composition according to any one of the previous claims, wherein the composition further comprises an additional pesticidal ingredient.

12. An herbicidal composition according to any one of the previous claims, wherein the composition is an oil dispersion.

13. An herbicidal composition according to claim 12, wherein the oil dispersion further comprises from 0.5 to 5% v/v water.

14. A method for the preparation of an herbicidal composition according to any one of the previous claims comprising mixing together the components a, b and c.

15. A method of controlling undesirable vegetation at a locus which comprises diluting with water a herbicidal composition according to any one of claims 1 to 13 and applying a weed controlling amount of the diluted composition to the locus.

16. Use of a saturated or unsaturated fatty acid to chemically stabilise an herbicidal composition comprising at least one sulfonylurea herbicide and at least one HPPD-inhibiting herbicide.

## Patentansprüche

1. Herbizide Zusammenfassung, die Folgendes umfasst:
a. mindestens ein Sulfonylharnstoffherbizid;
b. mindestens ein HPPD-hemmendes Herbizid; und
c. eine gesättigte oder ungesättigte Fettsäure in einer Menge von 1 Gew.-% bis 95 Gew.-%.

2. Herbizide Zusammensetzung nach Anspruch 1, wobei das Sulfonylharnstoffherbizid aus der Gruppe bestehend aus Amidosulfuron, Bensulfuron-methyl, Chlorimuron-ethyl, Chlorsulfuron, Cinosulfuron, Cyclosulfamuron, Ethemetsulfuron-methyl, Ethoxysulfuron, Flazasulfuron, Flucetosulfuron, Flupyrsulfuron, Foramsulfuron, Halosulfuron-methyl, Imazosulfuron, Iodosulfuron, Isosulfuron-methyl, Mesosulfuron-methyl, Metsulfuron-methyl, Nicosulfuron, Oxasulfuron, Primisulfuron-methyl, Prosulfuron, Pyrazosulfuron-ethyl, Rimsulfuron, Sulfometuron-methyl, Sulfosulfuron, Thifensulfuron-methyl, Triasulfuron, Tribenuron-methyl, Trifloxysulfuron, Triflusulfuron-methyl und Tritosulfuron oder einem landwirtschaftlich unbedenklichen Salz davon ausgewählt ist.

3. Herbizide Zusammensetzung nach Anspruch 1 oder 2, wobei es sich bei dem Sulfonylharnstoffherbizid um Nicosulfuron handelt.

4. Herbizide Zusammensetzung nach einem der vorhergehenden Ansprüche, wobei das HPPD-hemmende Herbizid aus der Gruppe bestehend aus Mesotrion, Sulcotrion, Tembotrion, 4-Hydroxy-3-[2-(2-methoxyethoxymethyl)-6-trifluormethylpyridin-3-carbonyl]-bicyclo[3.2.1]oct-3-en-2-on), Isoxaflutol und Pyrasulfotol ausgewählt ist.

5. Herbizide Zusammensetzung nach Anspruch 4, wobei es sich bei dem HPPD-hemmenden Herbizid um Mesotrion handelt.

6. Herbizide Zusammensetzung nach einem der vorhergehenden Ansprüche, wobei die gesättigte oder ungesättigte Fettsäure eine Kette mit mindestens 10 Kohlenstoffatomen umfasst.

7. Herbizide Zusammensetzung nach Anspruch 6, wobei die gesättigte oder ungesättigte Fettsäure aus der Gruppe bestehend aus Laurinsäure, Ölsäure, Linolsäure, Linolensäure und Caprinsäure ausgewählt ist.

8. Herbizide Zusammensetzung nach Anspruch 7, wobei es sich bei der gesättigten oder ungesättigten Fettsäure um Ölsäure handelt.

9. Herbizide Zusammensetzung nach einem der vorhergehenden Ansprüche, wobei die Zusammensetzung weiterhin ein Tensid umfasst.

10. Herbizide Zusammensetzung nach Anspruch 9, wobei es sich bei dem Tensid um ein Polyarylphenol handelt.

11. Herbizide Zusammensetzung nach einem der vorhergehenden Ansprüche, wobei die Zusammensetzung weiterhin einen zusätzlichen pestiziden Bestandteil umfasst.

12. Herbizide Zusammensetzung nach einem der vorhergehenden Ansprüche, wobei es sich bei der Zusammensetzung um eine Öldispersion handelt.

13. Herbizide Zusammensetzung nach Anspruch 12, wobei die Öldispersion weiterhin 0,5 bis 5% (v/v) Wasser umfasst.

14. Verfahren zur Herstellung einer herbiziden Zusammensetzung nach einem der vorhergehenden Ansprüche, bei dem man die Komponenten a, b und c miteinander vermischt.

15. Verfahren zum Bekämpfen von unerwünschtem Pflanzenwuchs an einem Ort, bei dem man eine herbizide Zusammensetzung nach einem der Ansprüche 1 bis 13 mit Wasser verdünnt und eine unkrautbekämpfende Menge der verdünnten Zusammensetzung auf den Ort ausbringt.

16. Verwendung einer gesättigten oder ungesättigten Fettsäure zum chemischen Stabilisieren einer herbiziden Zusammensetzung, die mindestens ein Sulfonylharnstoffherbizid und mindestens ein HPPD-hemmendes Herbizid umfasst.

## Revendications

1. Composition herbicide comprenant :
a. au moins un herbicide à base de sulfonylurée ;
b. au moins un herbicide inhibiteur de l'HPPD ; et
c. au moins un acide gras saturé ou insaturé, de 1% à 95% en poids.

2. Composition herbicide selon la revendication 1, dans laquelle l'herbicide à base de sulfonylurée est choisi dans le groupe constitué par l'amidosulfuron, le bensulfuron-méthyle, le chlorimuron-éthyle, le chlorsulfuron, le cinosulfuron, le cyclosulfamuron, l'éthametsulfuron-méthyle, l'éthoxysulfuron, le flazasulfuron, le flucétosulfuron, le flupyrsulfuron, le foramsulfuron, l'halosulfuron-méthyle, l'imazosulfuron, l'iodosulfuron, l'isosulfuron-méthyle, le mésosulfuron-méthyle, le metsulfuron-méthyle, le nicosulfuron, l'oxasulfuron, le primisulfuron-méthyle, le prosulfuron, le pyrazosulfuron-éthyle, le rimsulfuron, le sulfométuron-méthyle, le sulfosulfuron, le thifensulfuron-méthyle, le triasulfuron, le tribénuron-méthyle, le trifloxysulfuron, le triflusulfuron-méthyle et le tritosulfuron, ou un sel de ceux-ci acceptable sur le plan agricole.

3. Composition herbicide selon la revendication 1 ou la revendication 2, dans laquelle l'herbicide à base de sulfonylurée est le nicosulfuron.

4. Composition herbicide selon l'une quelconque des revendications précédentes, dans laquelle l'herbicide inhibiteur de l'HPPD est choisi dans le groupe constitué par la mésotrione, la sulcotrione, la tembotrione, la 4-hydroxy-3-[2-(2-méthoxyéthoxyméthyl)-6-trifluorométhylpyridine-3-carbonyl]-bicyclo[3.2.1]-oct-3-én-2-one), l'isoxaflutole et le pyrasulfotole.

5. Composition herbicide selon la revendication 4, dans laquelle l'herbicide inhibiteur de l'HPPD est la mésotrione.

6. Composition herbicide selon l'une quelconque des revendications précédentes, dans laquelle l'acide gras saturé ou insaturé comprend une chaîne d'au moins 10 atomes de carbone.

7. Composition herbicide selon la revendication 6, dans laquelle l'acide gras saturé ou insaturé est choisi dans le groupe constitué par l'acide laurique, l'acide oléique, l'acide linoléique, l'acide linolénique et l'acide caprique.

8. Composition herbicide selon la revendication 7, dans laquelle l'acide gras saturé ou insaturé est l'acide oléique.

9. Composition herbicide selon l'une quelconque des revendications précédentes, la composition comprenant en outre un agent tensioactif.

10. Composition herbicide selon la revendication 9, dans laquelle l'agent tensioactif est un polyarylphénol.

11. Composition herbicide selon l'une quelconque des revendications précédentes, la composition comprenant en outre un ingrédient pesticide supplémentaire.

12. Composition herbicide selon l'une quelconque des revendications précédentes, la composition étant une dispersion huileuse.

13. Composition herbicide selon la revendication 12, dans laquelle la dispersion huileuse comprend en outre de 0,5 à 5% v/v d'eau.

14. Méthode de préparation d'une composition herbicide selon l'une quelconque des revendications précédentes, comprenant le mélange des composants a, b et c.

15. Méthode de contrôle de végétation indésirable au niveau d'un lieu, comprenant la dilution avec de l'eau d'une composition herbicide selon l'une quelconque des revendications 1 à 13, et l'application d'une quantité suffisante pour le contrôle d'adventices de la composition diluée au lieu.

16. Utilisation d'un acide gras saturé ou insaturé afin de stabiliser chimiquement une composition herbicide comprenant au moins un herbicide à base de sulfonylurée et au moins un herbicide inhibiteur de l'HPPD.
